# FASCICULE DE BREVET EUROPEEN

(11) **EP 1 817 777 B1**
(45) Date de publication et mention de la délivrance du brevet: **23.09.2009**
(21) Numéro de dépôt: 05815079.8
(22) Date de dépôt: 27.10.2005
(51) Int. Cl.: G21C 3/352

(54) **GRILLE DE MAINTIEN DE CRAYONS POUR ASSEMBLAGE DE COMBUSTIBLE NUCLEAIRE ET ASSEMBLAGE CORRESPONDANT**
PENCIL-HALTEGITTER FÜR EINE KERNBRENNSTOFFBAUGRUPPE UND ENTSPRECHENDE BAUGRUPPE
PENCIL SUPPORT GRID FOR NUCLEAR FUEL ASSEMBLY AND CORRESPONDING ASSEMBLY

(30) Priorité: 30.11.2004 FR 0412708
(43) Date de publication de la demande: 15.08.2007
(73) Titulaire: Areva NP, 92400 Courbevoie (FR)
(72) Inventeur: BURFIN, Pascal, F-69290 CRAPONNE (FR); BONNAMOUR, Michel, F-69008 LYON (FR); MARGIER, Gilles, F-69003 LYON (FR); STABEL-WEINHEIMER, Jürgen, D-91058 ERLANGEN (DE); REN, Mingmin, 91056 Erlangen (DE)
(74) Mandataire: Domenego, Bertrand
(86) Numéro de dépôt international: PCT/FR2005/002700
(87) Numéro de publication internationale: WO 2006/058973

(56) Documents cités:
- EP-A- 0 052 924
- EP-A- 0 184 064
- EP-A- 0 240 411
- FR-A- 2 163 482
- FR-A- 2 736 190
- US-A- 5 307 392

## Description

La présente invention concerne une grille de maintien de crayons de combustible nucléaire pour assemblage de combustible nucléaire, du type délimitant un réseau sensiblement régulier de cellules et comprenant une ceinture périphérique, la ceinture périphérique comprenant sur au moins un de ses bords des ailettes de guidage et ayant en vue de dessus une forme sensiblement cornée avec quatre côtés et quatre angles.

L'invention s'applique en particulier aux assemblages de combustible pour réacteurs nucléaires à eau pressurisée.

Le document FR-2 736 190 décrit une grille de maintien du type précité.

La ceinture périphérique est formée par des plaquettes extérieures planes assemblées les unes aux autres. Les ailettes de guidage sont repliées, par rapport aux plans de leurs plaquettes respectives, vers l'intérieur de la grille.

Une telle grille permet de diminuer les déformations latérales de l'assemblage qu'elle équipe. L'inclinaison des ailettes vers l'intérieur permet notamment de limiter les risques d'accrochage des grilles de maintien de deux assemblages adjacents lors de la manutention des assemblages.

Toutefois, il existe encore des risques d'accrochage des grilles dans certaines configurations particulièrement pénalisantes.

C'est notamment le cas lorsque deux assemblages adjacents sont décalés d'un demi-pas du réseau de crayons de combustible. Lors d'une opération de manutention, les extrémités libres des ailettes de guidage d'une grille d'un premier des assemblages adjacents peuvent alors se trouver engagées entre deux ailettes adjacentes d'une grille du second des deux assemblages adjacents, et ainsi accrocher le bord de la grille du second assemblage. Si en outre, l'un des deux assemblages appuie latéralement sur l'autre des deux assemblages adjacents au point de provoquer la flexion et/ou le déplacement latéral des crayons périphériques d'au moins l'un des deux assemblages, les risques d'accrochage des grilles des deux assemblages adjacents sont augmentés. Un tel accrochage peut conduire à une déformation des assemblages adjacents et doit donc être évité.

Un but de l'invention est de résoudre ce problème en limitant les risques d'accrochage des grilles de deux assemblages adjacents.

A cet effet, l'invention a pour objet une grille du type précité, **caractérisée en ce que** ledit bord de la ceinture périphérique présente entre des ailettes de guidage adjacentes appartenant aux mêmes côtés du carré des décrochements vers l'intérieur de la grille.

Selon des modes particuliers de réalisation, la grille peut comprendre l'une ou plusieurs des caractéristiques suivantes, prise(s) isolément ou selon toutes les combinaisons techniquement possibles :
- les décrochements sont formés par des bossages ménagés dans la ceinture périphérique ;
- des orifices traversants de passage latéral du fluide de réfrigération sont ménagés dans la ceinture périphérique,
- les orifices traversants sont positionnés sensiblement au centre de faces externes de cellules périphériques délimitées par la ceinture périphérique ;
- la ceinture périphérique est dépourvue de ressorts de maintien latéral des crayons de combustible nucléaire reçus dans les cellules périphériques ;
- la grille comprend des plaquettes intérieures entrecroisées, lesquelles plaquettes intérieures sont entourées par la ceinture périphérique ;
- les plaquettes intérieures présentent des encoches d'emboîtement des plaquettes à leurs points de croisement, et les encoches comprennent des régions de largeur réduite ;
- les ailettes de guidage s'appuient sur des régions des plaquettes intérieures formant renfort ;
- les plaquettes intérieures adjacentes à la ceinture périphérique comportent des butées de retenue latérale des crayons de combustible nucléaire, lesquelles butées font saillie, à l'intérieur des cellules périphériques, depuis leurs faces intérieures opposées à la ceinture périphérique ;
- les butées de retenue latérale sont ménagées aux bords inférieur et supérieur des plaquettes intérieures adjacentes à la ceinture périphérique ;
- la ceinture périphérique présente des cuvettes en retrait vers l'intérieur de la grille et dans lesquelles les plaquettes intérieures sont soudées à la ceinture périphérique ;
- les bords inférieurs des plaquettes intérieures sont sensiblement rectilignes au niveau des faces des cellules destinées à recevoir des tubes-guides de l'assemblage de combustible nucléaire.

L'invention a également pour objet un assemblage de combustible nucléaire comprenant des crayons de combustible nucléaire, un squelette de support des crayons, le squelette de support comprenant des tubes-guides, des embouts disposés aux extrémités longitudinales des tubes-guides, et des grilles de maintien des crayons, **caractérisé en ce qu'**au moins une grille est une grille telle que définie ci-dessus.

L'invention sera mieux comprise à la lecture de la description qui va suivre, donnée uniquement à titre d'exemple, et faite en se référant aux dessins annexés, sur lesquels :
- la figure 1 est une vue schématique latérale d'un assemblage de combustible nucléaire pour réacteur à eau pressurisée,
- les figures 2 et 3 sont des vues schématiques, partielles, et en perspective, prises respectivement de dessus et de dessous, d'une grille de maintien pouvant équiper l'assemblage de la figure 1,
- la figure 4 est une vue schématique, partielle et en coupe latérale de la grille des figures 2 et 3, et
- la figure 5 est une vue schématique, partielle et de dessus de la grille des figures 2 et 3,
- les figures 6 et 7 sont des vues schématiques, latérales illustrant deux plaquettes intérieures utilisées pour réaliser la grille des figures 2 et 3,
- la figure 8 est une vue schématique agrandie de la partie cerclée VIII de la figure 6,
- la figure 9 est une vue schématique de face illustrant la position relative de deux grilles d'assemblage adjacents lors d'une opération de manutention, et
- la figure 10 est une vue schématique, partielle et latérale des deux assemblages de la figure 9.

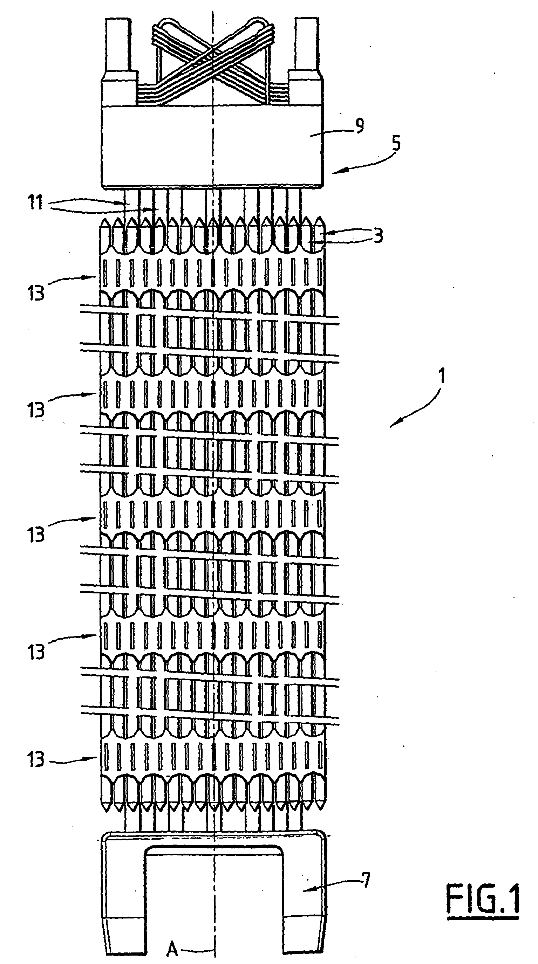

Afin d'illustrer le contexte de l'invention, la figure 1 représente schématiquement un assemblage 1 de combustible nucléaire pour réacteur à eau pressurisée. L'eau y assure donc une fonction de réfrigération et de modération, c'est-à-dire de ralentissement des neutrons produits par le combustible nucléaire.

L'assemblage 1 s'étend verticalement et de manière rectiligne le long d'une direction longitudinale A. Cette direction est la direction d'écoulement du fluide de réfrigération, c'est-à-dire de l'eau, lorsque l'assemblage 1 est placé en coeur. Plus précisément, l'écoulement de l'eau y est ascendant.

De manière classique, l'assemblage 1 comprend principalement des crayons 3 de combustible nucléaire et une structure ou squelette 5 de support des crayons 3.

Le squelette de support 5 comprend classiquement :
- un embout inférieur 7 et un embout supérieur 9 disposés aux extrémités longitudinales de l'assemblage 1,
- des tubes-guides 11 destinés à recevoir les crayons d'une grappe non-représentée de commande et d'arrêt du réacteur nucléaire, et
- des grilles 13 de maintien des crayons 3.

Les embouts 7 et 9 sont fixés aux extrémités longitudinales des tubes-guides 11.

Les crayons 3 s'étendent verticalement entre les embouts 7 et 9. Les crayons 3 sont disposés aux noeuds d'un réseau sensiblement régulier à base carrée où ils sont maintenus latéralement par les grilles 13. Certains des noeuds du réseau sont occupés par les tubes-guides 11 et éventuellement par un tube central d'instrumentation.

Généralement, la grille 13 supérieure et éventuellement la grille 13 inférieure assure en plus du maintien latéral mentionné précédemment, le support longitudinal des crayons 3. Les autres grilles 13 assurent quant à elles uniquement le maintien latéral des crayons.

Par la suite, l'invention sera décrite par référence à une grille 13 intermédiaire, c'est-à-dire une grille n'assurant qu'un maintien latéral. Toutefois, elle peut également s'appliquer aux grilles 13 assurant également une fonction de support des crayons 3.

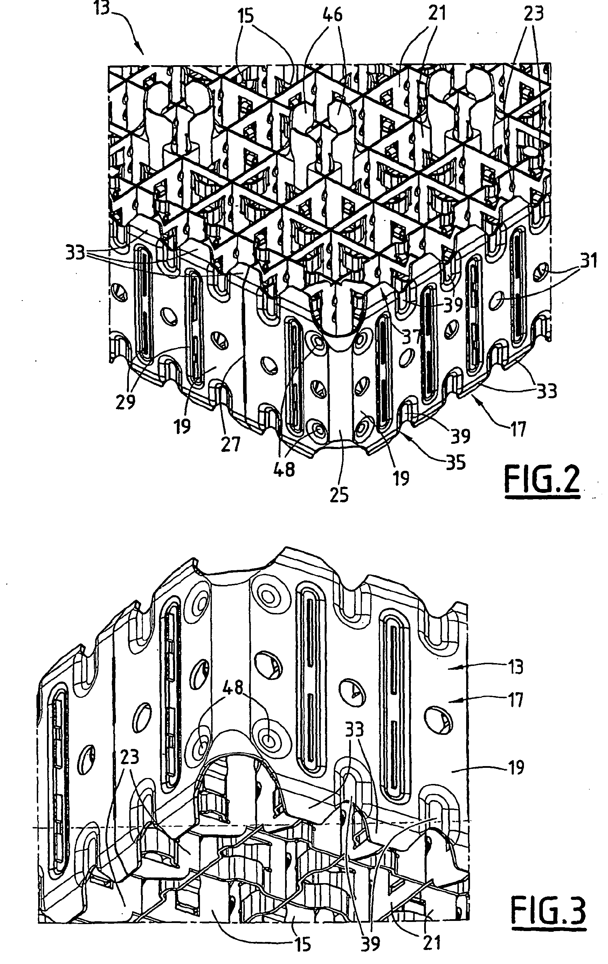

Comme illustré par les figures 2 à 5, la grille 13 comprend :
- des plaquettes intérieures 15 entrecroisées, et
- une ceinture périphérique 17, entourant les plaquettes intérieures 15, et formée par des plaquettes extérieures 19.

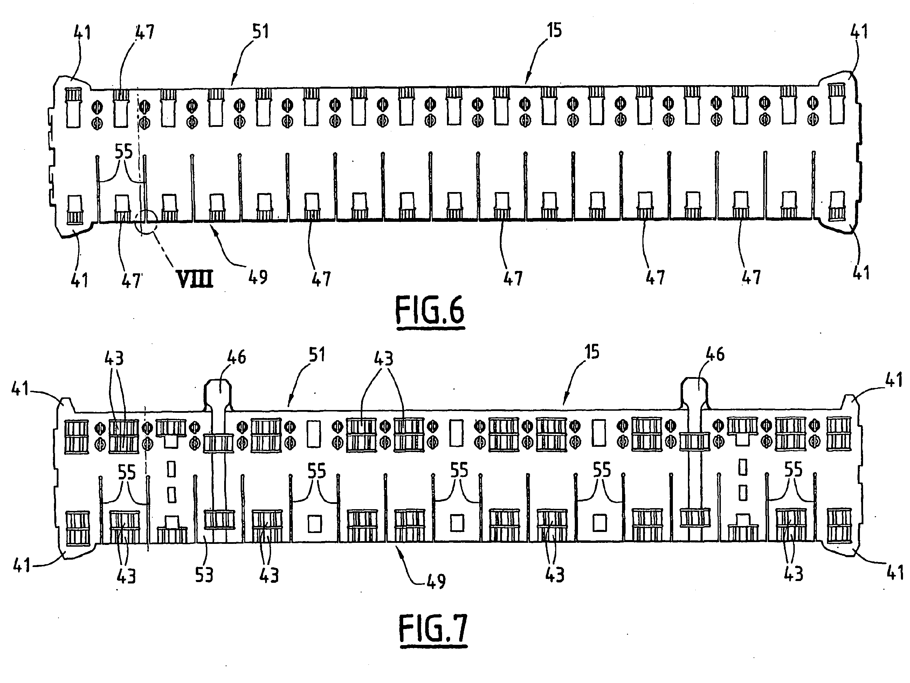

Les figures 6 et 7 illustrent deux des seize plaquettes intérieures 15 différentes utilisées pour réaliser la grille 13.

Les plaquettes intérieures 15 et extérieures 19 délimitent entre elles un réseau carré de cellules 21 et 23. Dans l'exemple représenté, ce réseau comprend 17x17 cellules, mais la grille 13 peut; dans d'autres variantes, comprendre un nombre différent de cellules, par exemple 15x15, 16x16,...

La référence numérique 21 désigne les cellules intérieures, c'est-à-dire celles qui ne sont délimitées que par des plaquettes intérieures 15. La référence numérique 23 désigne les cellules périphériques qui sont bordées par la ceinture périphérique 17 et qui sont donc délimitées par celle-ci et par les plaquettes intérieures 15.

Les cellules 21 et 23 sont centrées sur les noeuds du réseau de crayons de combustible 3, et reçoivent pour l'essentiel les crayons de combustible 3. Certaines des cellules 21 reçoivent des tubes-guides 11 et la cellule 21 centrale peut recevoir un tube central d'instrumentation. Chaque cellule 21, 23 a en vue de dessus une forme sensiblement carrée et présente ainsi quatre faces latérales opposées deux à deux.

La ceinture périphérique 17 a en vue de dessus une forme sensiblement carrée avec quatre angles 25.

Chaque plaquette extérieure 19 forme un des angles 25 et les plaquettes 19 sont assemblées entre elles en des régions 27 distinctes des angles 25, par exemple par soudage.

Les plaquettes extérieures 19 présentent des cuvettes 29 d'assemblage aux plaquettes intérieures 15.

Ces cuvettes 29, réalisées par exemple par emboutissage, sont en retrait vers l'intérieur de la grille 13 et s'étendent longitudinalement dans les plaquettes 19. Elles sont percées pour recevoir les extrémités latérales des plaquettes intérieures 15 qui sont soudées dans le fond des cuvettes 29.

Les extrémités latérales des plaquettes 15 situées au droit des régions d'assemblage 27 sont emprisonnées par les bords latéraux des plaquettes extérieures 19 adjacentes. La ceinture périphérique 17 ne présente pas, dans l'exemple représenté, de cuvette 29 dans les régions 27 d'assemblage.

Les plaquettes 19 de la ceinture périphérique 17 présentent en outre des orifices 31 de passage latéral du fluide de réfrigération.

Dans l'exemple représenté, ces orifices 31 sont circulaires et sont positionnés à mi-hauteur dans la ceinture 17. Chaque orifice 31 débouche dans une cellule périphérique 23 et est sensiblement centré par rapport à cette cellule périphérique 23. En d'autres termes, l'orifice 31 est sensiblement en regard de l'axe longitudinal du crayon 3 reçu dans la cellule périphérique 23 considérée.

Au droit des jonctions avec les plaquettes 15, la ceinture périphérique 17 comporte des ailettes 33 de guidage d'un assemblage 1 adjacent à l'assemblage considéré et de guidage du fluide de réfrigération.

Ces ailettes de guidage 33 font saillie vers le haut et vers le bas et sont repliées vers l'intérieur de la grille 13.

Entre les ailettes de guidage 33, les bords inférieur 35 et supérieur 37 de la ceinture 17 présentent des décrochements 39 vers l'intérieur de la grille 13. Les décrochements 39 ménagés dans le bord inférieur 35 s'étendent vers le haut et les décrochements 39 ménagés dans le bord supérieur 37 s'étendent vers le bas de sorte que les décrochements 39 ont en vue de face des formes oblongues.

Les décrochements 39 ont été réalisés par emboutissage des plaquettes extérieures 19 vers l'intérieur de la grille 13 pour former des bossages 40 en saillie vers l'intérieur des cellules périphériques 23.

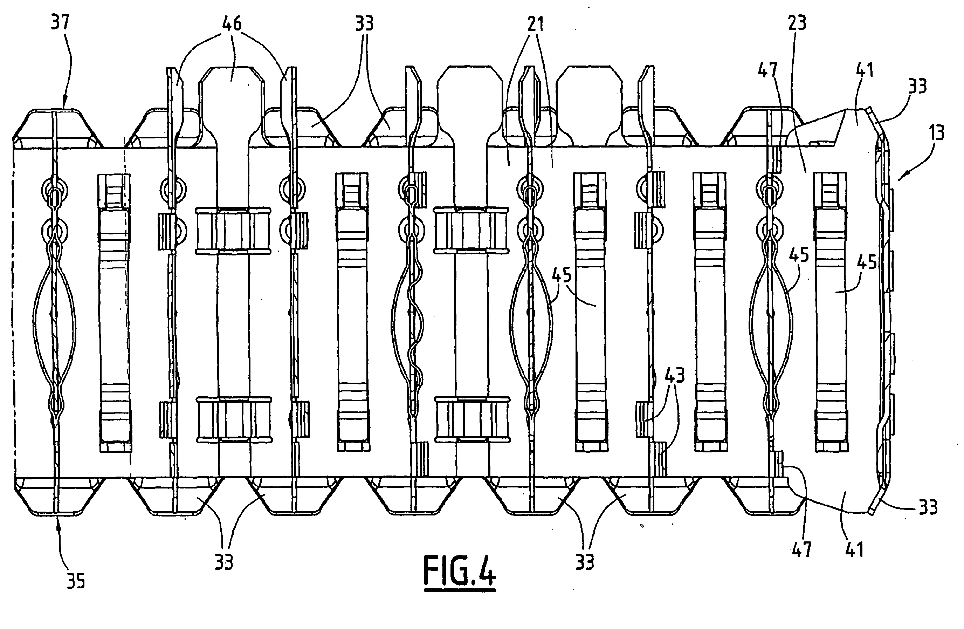

Comme illustré plus particulièrement par les figures 4, 6 et 7, les plaquettes intérieures 15 comportent à leurs extrémités latérales des renforts 41 qui font saillie vers le haut et vers le bas et sur lesquels les ailettes 33 prennent appui. Les ailettes 33 peuvent être soudées sur ces renforts 41.

A l'intérieur d'une cellule intérieure 21 recevant un crayon 3, le maintien latéral du crayon 3 est assuré par des bossettes 43 réalisées par découpage et repoussage du métal des plaquettes intérieures 15 et par des ressorts 45, par exemple rapportés sur les plaquettes intérieures 15.

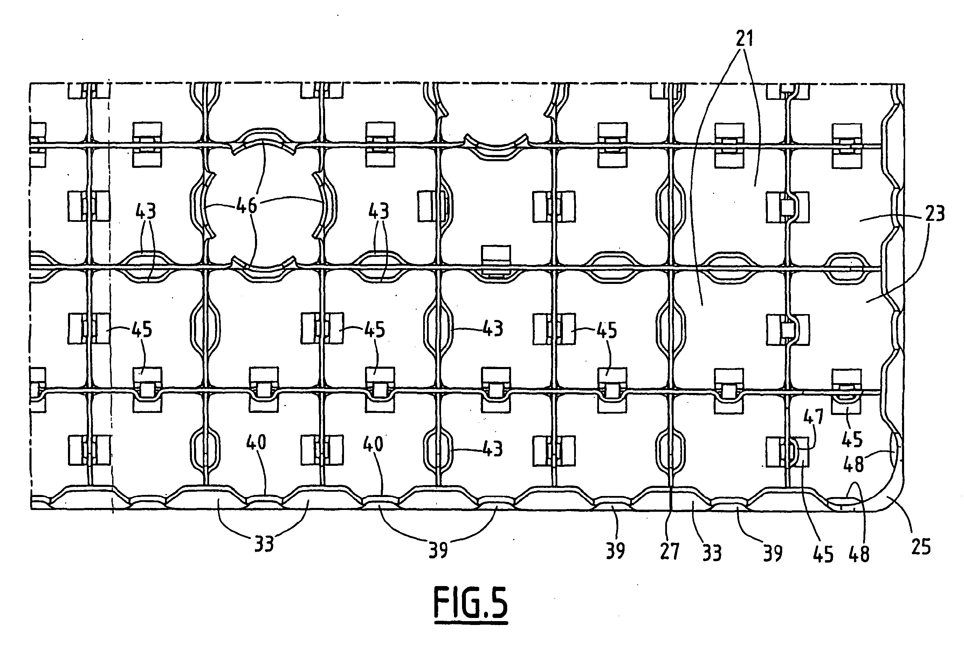

Plus précisément (figure 5), pour chaque cellule intérieure 21, les faces de la cellule 21 sont munies chacune soit d'une paire de bossettes 43 en saillie vers l'intérieur de la cellule, soit d'un ressort 45, chaque ressort 45 faisant face à une paire de bossettes 43.

Pour ce qui concerne les cellules 21 destinées à recevoir des tubes-guides 11, on observera que les plaquettes intérieures 15 sont en outre munies de pattes de soudage 46 qui font saillie vers le haut depuis les faces latérales de chaque cellule 21 considérée, et qui sont destinées à être soudées sur les tubes-guides 11. Ces pattes 46 ont une hauteur plus réduite que dans l'état de la technique, par exemple une hauteur de 8 mm.

Pour ce qui concerne les cellules périphériques 23, et comme illustré par la figure 5, le maintien latéral des crayons 3 qui y sont reçus est assuré, pour chaque cellule 23, par deux ressorts 45, une paire de bossettes 43 et une paire de bossages 40. Les bossages 40 ménagés dans la ceinture périphérique 17 font face à un ressort 45 et la paire de bossettes 43 fait également face à un ressort 45.

Pour les cellules périphériques 23 situées dans les coins 25, le maintien est assuré par deux ressorts 45 et par deux paires de bossettes circulaires 48 ménagées dans la ceinture périphérique 17 et faisant face aux ressorts 45.

Pour chacune des cellules périphériques 23, y compris les cellules 23 de coins, la ou les face(s) interne(s) opposée(s) à la ceinture périphérique 17 est (sont) munie(s) d'une paire de butées 47 de retenue latérale du crayon 3 reçu dans la cellule 23 considérée. Ces butées 47 sont formées dans les plaquettes intérieures 15 longeant la ceinture périphérique 17.

Une telle plaquette intérieure 15 est représentée sur la figure 6 où l'on peut voir que, pour chaque cellule 23, une des butées 47 est située au bord inférieur 49 de la plaquette 15, et l'autre au bord supérieur 51 de la plaquette 15. Ces butées 47 ont été formées par découpage puis repoussage du matériau de la plaquette 15 vers l'intérieur des cellules 23 considérées.

Dans l'exemple considéré, chaque paire de butées 47 encadre un ressort 45 faisant face à la ceinture périphérique 17.

Dans cet exemple également, la ceinture périphérique 17 n'est pas munie de ressort de maintien latéral des crayons 3 périphériques.

On notera que les bords inférieurs 49 des plaquettes intérieures 15 sont rectilignes dans les faces 53 des cellules 21 recevant des tubes-guides 11 (figures 3 et 7). En particulier, ces faces 53 ne présentent plus de découpe inférieure comme dans l'état de la technique, ce qui permet d'améliorer la tenue au flambage de la grille 13.

Pour assembler les plaquettes 15 à leurs points de croisement, des encoches 55 sont ménagées dans les plaquettes 15. Pour la moitié des plaquettes 15, les encoches 55 débouchent dans leurs bords inférieurs 49. Pour l'autre moitié, les encoches 55 débouchent dans leurs bords supérieurs 51, permettant ainsi l'emboîtement de toutes les plaquettes intérieures 15 grâce à leurs encoches 55.

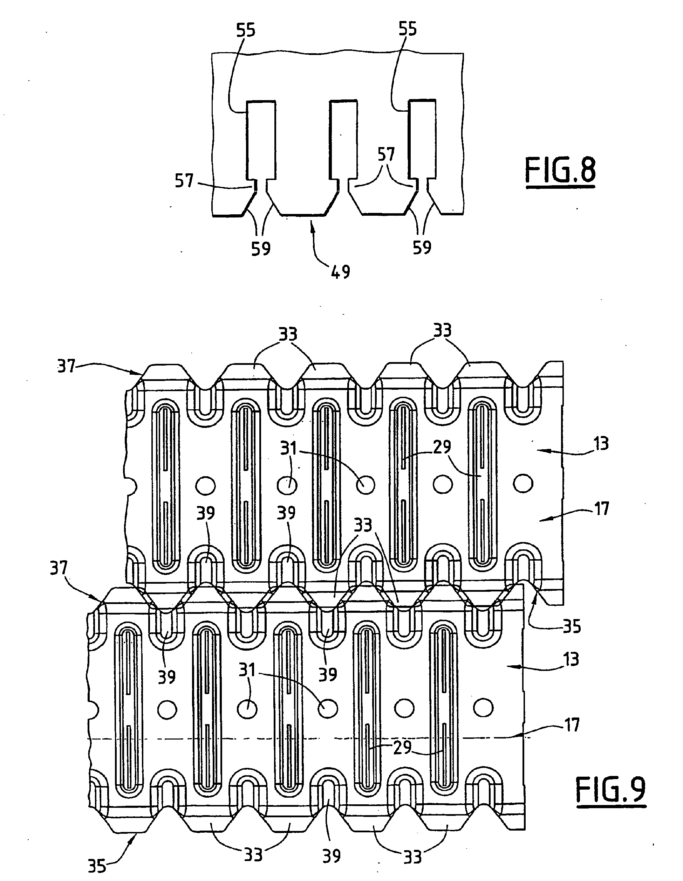

Comme illustré très schématiquement par la figure 8, les fentes 55 présentent, à leurs extrémités débouchantes, chacune un étranglement 57 relié au bord 49 ou 51 correspondant par des chanfreins 59. Ces chanfreins 59 facilitent l'emboîtement des plaquettes intérieures 15 via les encoches 55 à leur points de croisement.

Les étranglements 57, qui correspondent à une réduction de largeur par exemple de l'ordre de 100 ou 200 µm, permettent d'assurer un maintien mécanique satisfaisant des plaquettes intérieures 15 à leurs points de croisements. Cela permet de diminuer localement le jeu entre les plaquettes intérieures 15 emboîtées et donc d'améliorer la qualité du soudage effectué par la suite au droit des points de croisement.

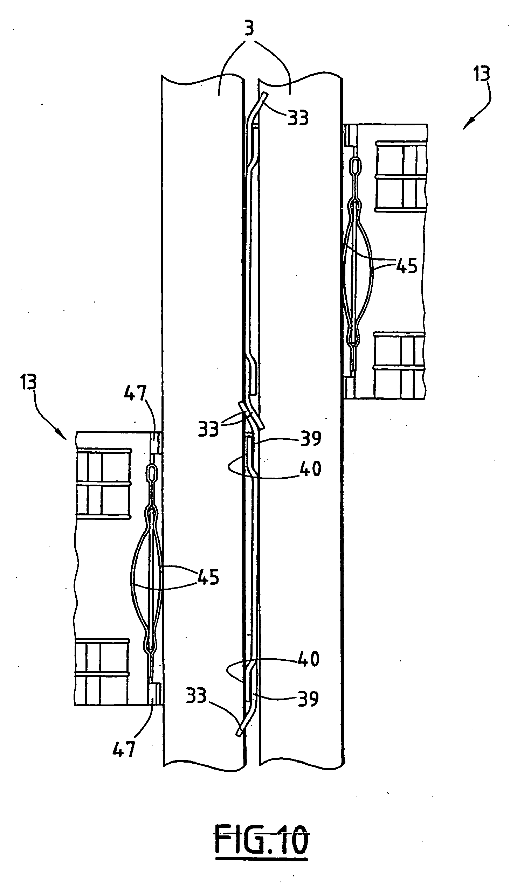

Les figures 9 et 10 illustrent la configuration mentionnée dans le préambule de la présente description, et qui était l'une des situations où les risques d'accrochage entre deux assemblages 1 adjacents étaient les plus importants.

On distingue sur la figure 9 les ceintures périphériques 17 de deux grilles 13 de deux assemblages 1 adjacents. Ces deux grilles 13 sont décalées latéralement d'une moitié du pas des réseaux de crayons de combustible nucléaire.

La grille 13 inférieure appartient à un premier assemblage 1 et la grille 13 supérieure à un second assemblage 1 en cours de manutention, ce qui explique que l'une soit située au-dessus de l'autre.

Du fait du décalage latéral, les ailettes 33 supérieures de la grille 13 inférieure sont disposées entre les ailettes de guidage 33 inférieures de la grille 13 supérieure et engagées dans les décrochements 39 inférieurs de la grille 13 supérieure.

De même, les ailettes 33 inférieures de la grille 13 supérieure sont engagées dans les décrochements 39 supérieurs de la grille 13 inférieure.

Ainsi, les risques que les extrémités libres des ailettes de guidage 33 d'une grille 13 accrochent un bord longitudinal de la grille 13 adjacente sont réduits.

Ces risques sont d'autant plus réduits, que dans l'éventualité où l'un des assemblages 1 pousse latéralement les crayons 3 périphériques de l'autre assemblage 1 vers l'intérieur, ces crayons périphériques 3 viennent s'appuyer contre les butées 47 qui limitent la flexion et les déplacements des crayons 3 vers l'intérieur de l'assemblage 1. Cela est illustré par la figure 10 où les crayons 3 directement adjacents aux crayons 3 périphériques n'ont pas été représentés.

Les butées 47 limitent d'autant plus les déplacements et les flexions des crayons 3 qu'elles sont disposées aux bords inférieur 49 et supérieur 51 des plaquettes 15 bordant la ceinture périphérique 17.

Les bossages 40 formés par les décrochements 39 dans la ceinture périphérique 17 sont disposées aux extrémités longitudinales de la grille 13 et assurent ainsi un bon maintien latéral et une limitation accrue des déplacements latéraux et des flexions des crayons 3.

L'utilisation de cuvettes 29 en retrait pour assurer le soudage de la ceinture périphérique 17 aux plaquettes intérieures 15 permet de limiter également les risques d'accrochage d'assemblages 1 adjacents.

Ainsi, les risques d'accrochage des grilles 13 d'assemblage 1 adjacents sont limités notamment lors de leur manutention.

La présence des renforts 41 des ailettes 33 de guidage permet d'augmenter la rigidité des ailettes de guidage 33, et de limiter leurs risques de déformation ainsi que le risque d'accrochage qui pourrait résulter d'une déformation des plaquettes extérieures 19.

Les orifices 31 permettent d'augmenter la transparence hydraulique transverse de la grille 13 et donc d'accroître la tenue au flambage de l'assemblage 1 et ainsi les risques d'accrochage de deux assemblages 1 adjacents.

Les caractéristiques décrites précédemment, et notamment les décrochements 39, les butées 47, les étranglements 57, les orifices 31, les renforts 41, les cuvettes 29 et les bords inférieurs rectilignes des faces 53 des cellules recevant des tubes-guides 11, peuvent être utilisées indépendamment les unes des autres pour atteindre le but global de limitation des déformations des assemblages de combustible nucléaire en réacteur.

Dans certains cas, les décrochements 39 peuvent n'être présents qu'à un bord longitudinal de la grille 13.

## Revendications

1. Grille (13) de maintien de crayons (3) de combustible nucléaire pour assemblage (1) de combustible nucléaire, du type délimitant un réseau sensiblement régulier de cellules (21, 23) et comprenant une ceinture périphérique (17), la ceinture périphérique (17) comprenant sur au moins un de ses bords (35, 37) des ailettes de guidage (33) et ayant en vue de dessus une forme sensiblement carrée avec quatre côtés et quatre angles (25), **caractérisée en ce que** ledit bord (35, 37) de la ceinture périphérique (17) présente entre des ailettes de guidage (33) adjacentes appartenant aux mêmes côtés du carré des décrochements (39) vers l'intérieur de la grille (13).

2. Grille selon la revendication 1, **caractérisée en ce que** les décrochements (39) sont formés par des bossages (40) ménagés dans la ceinture périphérique.

3. Grille selon la revendication 1 ou 2, **caractérisée en ce que** des orifices traversants (31) de passage latéral du fluide de réfrigération sont ménagés dans la ceinture périphérique (17).

4. Grille selon la revendication 3, **caractérisée en ce que** les orifices traversants (31) sont positionnés sensiblement au centre de faces externes de cellules périphériques (23) délimitées par la ceinture périphérique (17).

5. Grille selon la revendication 4, **caractérisée en ce que** la ceinture périphérique (17) est dépourvue de ressorts de maintien latéral des crayons de combustible nucléaire (3) reçus dans les cellules périphériques (23).

6. Grille selon l'une des revendications 1 à 5, **caractérisée en ce que** la grille (13) comprend des plaquettes intérieures (15) entrecroisées, lesquelles plaquettes intérieures (15) sont entourées par la ceinture périphérique (17).

7. Grille selon la revendication 6, **caractérisée en ce que** les plaquettes intérieures présentent des encoches (55) d'emboîtement des plaquettes (15) à leurs points de croisement, et **en ce que** tes encoches (55) comprennent des régions (57) de largeur réduite.

8. Grille selon la revendication 6 ou 7, **caractérisée en ce que** les ailettes de guidage (33) s'appuient sur des régions (41) des plaquettes intérieures (15) formant renfort.

9. Grille selon l'une des revendications 6 à 8, **caractérisée en ce que** les plaquettes intérieures (15) adjacentes à la ceinture périphérique (17) comportent des butées (47) de retenue latérale des crayons de combustible nucléaire (3), lesquelles butées (47) font saillie, à l'intérieur des cellules périphériques (23), depuis leurs faces intérieures opposées à la ceinture périphérique (17).

10. Grille selon la revendication 9, **caractérisée en ce que** les butées de retenue latérale (47) sont ménagées aux bords inférieur (49) et supérieur (51) des plaquettes Intérieures (15) adjacentes à la ceinture périphérique (17).

11. Grille selon l'une des revendications 6 à 10, **caractérisée en ce que** la ceinture périphérique (17) présente des cuvettes (29) en retrait vers l'intérieur de la grille (13) et dans lesquelles les plaquettes intérieures (15) sont soudées à la ceinture périphérique (17).

12. Grille selon l'une des revendications 6 à 11, **caractérisée en ce que** les bords inférieurs (49) des plaquettes intérieures (15) sont sensiblement rectilignes au niveau des faces des cellules (21) destinées à recevoir des tubes-guides (11) de l'assemblage de combustible nucléaire (1).

13. Assemblage de combustible nucléaire (1) comprenant des crayons (3) de combustible nucléaire, un squelette (5) de support des crayons (3), le squelette de support (5) comprenant des tubes-guides (11), des embouts (7, 9) disposés aux extrémités longitudinales des tubes-guides (11), et des grilles (13) de maintien des crayons (3), **caractérisé en ce qu'**au moins une grille (13) est une grille selon l'une des revendications précédentes.

## Claims

1. Nuclear fuel rod (3) support grid (13) for a nuclear fuel assembly (1), of the type delimiting a substantially regular network of cells (21, 23) and comprising a peripheral belt (17), the peripheral belt (17) comprising guide fins (33) on at least one of its edges (35, 37) and having, in a view from above, a substantially square shape with four sides and four angles (25), **characterised in that** said edge (35, 37) of the peripheral belt (17) has, between the adjacent guide fins (33) belonging to the same sides of the square, disconnections (39) towards the interior of the grid (13).

2. Grid according to claim 1, **characterised in that** the disconnections (39) are formed by bosses (40) provided in the peripheral belt.

3. Grid according to claim 1 or 2, **characterised in that** transverse orifices (31) for lateral passage of cooling fluid are provided in the peripheral belt (17).

4. Grid according to claim 3, **characterised in that** the transverse orifices (31) are positioned substantially in the centre of the external faces of peripheral cells (23) delimited by the peripheral belt (17).

5. Grid according to claim 4, **characterised in that** the peripheral belt (17) is devoid of lateral support springs of the nuclear fuel rods (3) received in the peripheral cells (23).

6. Grid according to one of the claims 1 to 5, **characterised in that** the grid (13) comprises intersecting interior plates (15), which interior plates (15) are surrounded by the peripheral belt (17).

7. Grid according to claim 6, **characterised in that** the interior plates have nesting notches (55) for the plates (15) at their intersection points, and **in that** the notches (55) comprise regions (57) of a reduced width.

8. Grid according to claim 6 or 7, **characterised in that** the guide fins (33) abut on regions (41) of the interior plates (15) forming a reinforcement.

9. Grid according to one of the claims 6 to 8, **characterised in that** the interior plates (15) adjacent to the peripheral belt (17) comprise limit stops (47) for lateral retention of the nuclear fuel rods (3), which limit stops (47) project towards the interior of the peripheral cells (23) from their interior faces which are opposite the peripheral belt (17).

10. Grid according to claim 9, **characterised in that** the lateral retention limit stops (47) are provided at the lower (49) and upper (51) edges of the interior plates (15) adjacent to the peripheral belt (17).

11. Grid according to one of the claims 6 to 10, **characterised in that** the peripheral belt (17) has depressions (29) which are recessed towards the interior of the grid (13) and in which the interior plates (15) are welded to the peripheral belt (17).

12. Grid according to one of the claims 6 to 11, **characterised in that** the lower edges (49) of the interior plates (15) are substantially rectilinear at the level of the faces of the cells (21) intended to receive the guide tubes (11) of the nuclear fuel assembly (1).

13. Nuclear fuel assembly (1) comprising nuclear fuel rods (3), a support skeleton (5) for the rods (3), the support skeleton (5) comprising guide tubes (11), ferrules (7, 9) disposed at the longitudinal ends of the guide tubes (11), and support grids (13) for the rods (3), **characterised in that** at least one grid (13) is a grid according to one of the preceding claims.

## Patentansprüche

1. Haltegitter (13) für Kernbrennstäbe (3) eines Brennelements (1), von dem Typ, der ein im Wesentlichen gleichmäßiges Gitter von Zellen (21, 23) begrenzt und einen Außenring (17) umfasst, wobei der Außenring (17) an wenigstens einer seiner Kanten (35, 37) Führungsrippen (33) aufweist und in der Draufsicht eine im Wesentlichen quadratische Form hat, mit vier Seiten und vier Winkeln (25),
**dadurch gekennzeichnet, dass** die Kante (35, 37) des Außenrings (17) zwischen benachbarten, zu derselben Seite des Quadrats gehörenden Führungsrippen (33) Eintiefungen (39) in Richtung Innenseite des Gitters (13) aufweist.

2. Haltegitter nach Anspruch 1, **dadurch gekennzeichnet, dass** die Eintiefungen (39) durch Buckel (40) gebildet werden, realisiert in dem Außenring.

3. Haltegitter nach Anspruch 1 oder 2, **dadurch gekennzeichnet, dass** in dem Außenring (17) Durchgangslöcher (31) für den seitlichen Durchlass des Kühlfluids vorgesehen sind.

4. Haltegitter nach Anspruch 3, **dadurch gekennzeichnet, dass** die Durchgangslöcher (31) sich im Wesentlichen im Zentrum der Außenseiten der durch den Umfangsring (17) begrenzten peripheren Zellen befinden.

5. Haltegitter nach Anspruch 4, **dadurch gekennzeichnet, dass** der Außenring (17) keine seitlichen Haltefedern der von den peripheren Zellen (23) aufgenommenen Kernbrennstäbe (3) aufweist.

6. Haltegitter nach einem der Ansprüche 1 bis 5, **dadurch gekennzeichnet, dass** das Haltegitter (13) sich kreuzende Innenplatten (15) umfasst, wobei diese Innenplatten (15) von dem Außenring (17) umschlossen sind.

7. Haltegitter nach Anspruch 6, **dadurch gekennzeichnet, dass** die Innenplatten Auskerbungen (55) zum Ineinanderfügen der Platten (15) an ihren Kreuzungspunkten aufweisen, und dadurch, dass die Auskerbungen (55) Bereiche (57) von geringerer Breite aufweisen.

8. Haltegitter nach Anspruch 6 oder 7, **dadurch gekennzeichnet, dass** die Führungsrippen (33) sich auf Vorsprüngen (41) der Platten abstützen.

9. Haltegitter nach einem der Ansprüche 6 bis 8, **dadurch gekennzeichnet, dass** die dem Außenring (17) benachbarten Innenplatten (15) Seitenhaltanschläge (47) der Brennstäbe (3) umfassen, wobei diese Anschläge ins Innere der peripheren Zellen (23) vorstehen, von ihren dem Außenring (17) entgegengesetzten Seiten aus.

10. Haltegitter nach Anspruch 9, **dadurch gekennzeichnet, dass** die Seitenhalteanschläge (47) an den unteren (49) und oberen (51) Rändern der dem Außenring (17) benachbarten Innenplatten (15) vorgesehen sind.

11. Haltegitter nach einem der Ansprüche 6 bis 10, **dadurch gekennzeichnet, dass** der Außenring (17) Wölbungen (29) in Richtung Innenseite des Haltegitters (13) aufweist, auf denen die Innenplatten an dem Außenring (17) festgeschweißt sind.

12. Haltegitter nach einem der Ansprüche 6 bis 11, **dadurch gekennzeichnet, dass** die unteren Ränder (49) der Innenplatten (15) in Höhe der Seiten der Zellen (21), die zur Aufnahme der Führungsrohre (11) der Brennelemente (1) bestimmt sind, im Wesentlichen geradlinig sind.

13. Brennelement (1), Brennstäben (3) mit einem Traggestell (5) der Brennstäbe (3) umfassend, wobei das Traggestell (5) Führungsrohre (11), an den longitudinalen Enden der Führungsrohre (11) angebrachte Endstücke (7, 9) und Haltegitter (13) der Brennstäbe (3) umfasst, **dadurch gekennzeichnet, dass** wenigstens ein Gitter (13) ein Gitter nach einem der vorangehenden Ansprüche ist.
